# EUROPEAN PATENT SPECIFICATION

(11) **EP 4 134 410 B1**
(45) Date of publication and mention of the grant of the patent: **02.10.2024**
(21) Application number: 21306118.7
(22) Date of filing: 13.08.2021
(51) Int. Cl.: C09K 8/035, C09K 8/04, C10M 101/00

(54) **LUBRICATING ADDITIVE AND WATER-BASED DRILLING FLUID**
SCHMIERMITTELZUSATZ
ADDITIF DE LUBRIFICATION

(43) Date of publication of application: 15.02.2023
(73) Proprietor: Oleon N.V., 9940 Ertvelde (BE)
(72) Inventor: DELIGNY, Julien, 60280 VENETTE (FR); KERBRAT, Marion, 60280 MARGNY-LES-COMPIEGNE (FR); ZITOUNI, Karima, 91420 MORANGIS (FR)
(74) Representative: Santarelli

(56) References cited:
- WO-A1-2018/191585
- WO-A1-2019/129792
- US-A1- 2016 108 304
- US-A1- 2017 204 320

## Description

The present invention relates to a composition, in particular a lubricating additive, that can be added in a water-based mud used for drilling operations of subterranean wellbores.

A water-based mud (WBM) is a drilling mud or fluid, wherein the major fluid is water comprising clay(s) and/or mineral salt(s). The mud is injected at high pressure, inside a pipe, until it reaches the drilling tool (at the end of the pipe), from where the mud rises to the surface of the well through the annular space located between the pipe and the wall of the well, carrying with it the cuttings.

The drilling mud is therefore used to bring up the cuttings or drilled materials, to maintain the wall, but also to protect the drilling equipment, i.e. to cool and lubricate the drill bit and the rotating drilling tool in order to avoid rapid wear of the metal parts, especially the moving metal parts.

The lubrication brought by drilling fluids is then the key to reduce the frictions between the drilling tools and the rocks (formation and/or casing). WO 2019/129792 discloses a lubricating additive comprising a polyol fatty acid ester, a fatty acid salt of an amino alcohol, and a nonionic surfactant having a HLB larger than 6.Furthermore, a water-based drilling mud comprising water, at least a clay or a polymer, and the lubricating additive is disclosed.

While oil-based muds (OBMs) naturally lubricate the drilling tools, water-based muds exhibit a poor lubricating effect and require the use of a lubricating additive. Furthermore, with the increase of offshore drilling, the consideration of environmental aspects is growing. The use of WBMs is then often preferred to OBMs to avoid injecting large volume of oil in the nature. Therefore, development of lubricating additives for WBM has been the subject of deep investigations the past years and are selected from their torque reduction efficiency, stability, bioavailability of raw materials, cost of production, compatibility with drilling media, low pour point and high flash point.

The lubricating additive must also remain well dispersed in the aqueous media for a better availability for lubrication. One of the limits to the use of lubricating additive is to enhance flocculation and aggregation of clay particles leading to a faster sedimentation rate of the solid. In that case, the drilling tools are blocked causing an inefficient drilling.

The work of the inventors has shown that a particular composition, perfectly dispersible in water comprising clay(s) and/or mineral salt(s), provides better lubricating properties to water-based muds.

More particularly, the composition according to the invention present the following characteristics:
- a pour point of at most 20°C, preferably of at most 0°C, more preferably of at most -20°C; in particular, the pour point is comprised between -60°C and 20°C, preferably between -50°C and 0°C, more preferably between -40°C and -20°C;
- a flash point of at least 150°C, preferably of at least 200°C; more preferably of at least 220°C; the flash point is comprised between 150°C and 350°C, preferably between 200°C and 300°C, more preferably between 220°C and 280°C;
- a kinematic viscosity at 40°C of at most 200 mPa.s, preferably of at most 180 mPa.s; in particular, the kinematic viscosity at 40°C is comprised between 70 and 200 mPa.s, preferably between 100 and 180 mPa.s.
- a solubility at 25°C in water-based mud comprising a clay and a salt, such as 80 g/L of clay and 30-60 g/L of salts;
- a reduction of frictional forces, such as the torque reduction is of at least 80% whatever the aging condition (before hot rolling or after hot rolling);
- an effective lubricant property at a temperature of 90°C, such as having a torque readings after hot rolling at 90°C of less than 1 N.m.

In the present patent application, unless otherwise indicated,
- pour points are measured according to standard ASTM D97;
- flash points are measured according to standard ASTM D92;
- kinematic viscosities at 40°C are measured according to standard ASTM D7945-21;
- torque readings are measured according to the American Petroleum Institute (API) standard API RP 13I;
- torque reduction (%) = (torque reading of the water-based muds without any lubricating additive - torque reading of the water-based muds with a composition used as lubricating additive) / torque reading of the water-based muds without any lubricating additive.

The present invention relates thus to a composition comprising or consisting of:
- 50-80 wt% of at least an estolide polyol ester;
- 10-20 wt% of a salt of fatty acid(s) and an alkanolamine selected from the group consisting of ethanolamine, diethanolamine, triethanolamine and mixtures thereof;
- 10-30 wt% of a surfactant selected from the group consisting of sorbitan monolaurate, sorbitan monooleate, ethoxylated derivatives thereof, and mixtures thereof;
weight percentages being based on the weight of the composition.

In the present application, unless otherwise indicated, all ranges of values used are to be understood as being inclusive limits.

An estolide is an oligomeric fatty acid(s), wherein the carboxylic acid function of one fatty acid reacts at the site of a double bond or with the hydroxyl function of another fatty acid, to form a secondary ester linkage.

A possible mechanism explaining the formation of an ester linkage at the site of a double bond is the formation of a carbocation that can undergo nucleophilic addition by another fatty acid, the carbocation being obtainable under acidic conditions, such as in presence of perchloric acid.

The fatty acid(s) comprised in the estolide may be straight or branched, preferably straight.

The estolide may be saturated or unsaturated, optionally substituted with an hydroxyl group.

An estolide polyol ester is an ester of estolide and polyol i.e. an estolide wherein the remaining free carboxylic acid function is esterified with a polyol.

The estolide polyol ester is advantageously obtainable by a process comprising a step of oligomerization reaction of fatty acid(s) to form an estolide, followed by a step of esterification reaction between the remaining free carboxylic acid function and a polyol.

The oligomerization reaction is preferably carried out at a temperature between 180 and 220°C, optionally in the presence of an acid such as perchloric acid. The oligomerization reaction is preferably conducted until the acid value reaches a value comprised between 15 and 70 mg KOH/g, more preferably between 35 and 65 mg KOH/g, even more preferably between 60 and 65 mg KOH/g.

In the present application, the acid values were measured according to standard AOCS Cd 3D-63.

From the acid value, the mean degree of oligomerization can be determined theoretically. Thus, the mean degree of oligomerization of the fatty acid(s) in the estolide is preferably comprised between 2 and 12, more preferably between 2 and 9, even more preferably between 3 and 7.

In case the estolide is unsaturated, an additional step of hydrogenation reaction can occur to form a saturated estolide.

The oligomerization reaction may be conducted from a single type of fatty acid comprising a double bond and/or a hydroxyl group, or from a mixture of several types of fatty acids with the provisio that at least one type of fatty acid of the mixture comprises a double bond and/or a hydroxyl group.

The fatty acid comprising a double bond and/or a hydroxyl group, preferably comprises from 16 to 24 carbon atoms.

The fatty acid comprising a double bond and/or a hydroxyl group is preferably selected from the group consisting of ricinoleic acid, lesquerolic acid, oleic acid, linoleic acid, linolenic acid, palmitoleic acid, eicosenoic acids, erucic acid, 12-hydroxystearic acid and/or nervonic acid.

During the oligomerization reaction, a saturated non substituted monocarboxylic acid such as a saturated non substituted fatty acid may be used to stop the oligomerization reaction.

The saturated non substituted monocarboxylic acid preferably comprised between 2 and 26 carbon atoms.

The saturated non substituted monocarboxylic acid is preferably selected from the group consisting of acetic acid, butyric acid, caproic acid, capric acid, caprylic acid, lauric acid, myristic acid, palmitic acid, stearic acid, arachidic acid and/or behenic acid.

The esterification reaction is preferably carried out at a temperature between 150 and 200°C. A catalyst may be used to speed up the reaction, such as paratoluene sulfonic acid. The esterification reaction is preferably conducted until the acid value is of at most 5 mg KOH/g.

In the estolide polyol ester of the composition according to the invention, the polyol is saturated, linear or cyclic, straight or branched, and preferably comprises between 2 and 16 carbon atoms, more preferably between 3 and 16 carbon atoms, even more preferably between 3 and 10 carbon atoms.

Preferably, the polyol comprises between 2 and 5 hydroxyl groups.

The polyol may comprise an amine and/or an ether function.

The polyol is preferably selected among the group consisting of ethylene glycol, propylene glycol, 1,3-dioxane-5,5-dimethanol, diethanolamine, dipropanolamine, sorbitan, isosorbide, neopentyl glycol, pentaerythritol, trimethylolpropane, glycerol, polyglycerols and carbohydrates.

A mixture of estolide polyol esters can be used in the composition according to the invention, differentiating themselves by the fatty acids(s) involved in the oligomerization reaction and/or by the polyol.

Advantageously, in the composition according to the invention, the estolide polyol ester is of Formula I: 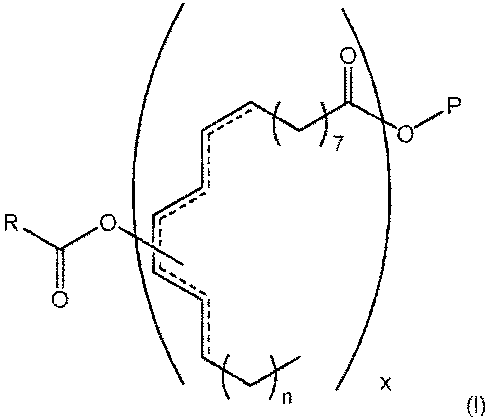 wherein:
- n is an integer ranging from 0 to 8;
- the dotted line represents the localization of a secondary ester linkage of the estolide and the localization of an optional bond, with the provisio of maximum two double bonds per acyl group;
- P represents a saturated, linear or cyclic, straight or branched, hydrocarbon chain comprising from 2 to 16 carbon atoms, substituted with at least one hydroxyl group, and optionally comprises an amine and/or an ether function;
- x is an integer ranging from 1 to 11;
- R represents an hydrocarbon chain, saturated or unsaturated, straight or branched, comprising from 1 to 25 carbon atoms, optionally substituted by a hydroxyl group.

Each secondary ester linkage of the estolide can be positioned between C9 and C15, as represented by the RCOO- group with a bond that can be linked to a carbon, between C9 and C15, of the acyl group(s) in brackets.

The estolide polyol ester of the Formula (I) may be saturated or unsaturated. The dotted line indicates where a double bond can be positioned, i.e. between C9 and C15.

In the present application, all positions of carbon atoms are given according to IUPAC nomenclature, i.e. the carbon of the C=O group of the carboxylic acid group is C1.

With reference to the description of the polyol of the estolide polyol ester, P represents the esterification residue of a polyol. Preferably, P comprises between 3 to 16 carbon atoms, more preferably between 3 and 10 carbon atoms.

Preferably, P comprises between 1 and 4 hydroxyl groups.

Advantageously, R of the estolide polyol ester of Formula (I) comprises a hydroxyl group. Preferably, the hydroxyl group is positioned on the C12 or on the C15, more preferably on the C12.

Preferably, x is comprised between 1 and 8, more preferably between 2 and 6.

In a first embodiment, the estolide is obtained from the oligomerization reaction of a single type of fatty acid comprising a double bond and/or a hydroxyl group.

Preferably, the fatty acid to be oligomerized comprises a double bond and a hydroxyl group. In particular, the fatty acid is ricinoleic acid or lesquerolic acid.

Those fatty acids may be hydrogenated prior to the oligomerization reaction, or the resulting unsaturated estolide or unsaturated estolide polyol ester may be hydrogenated to obtain a saturated estolide polyol ester comprising an hydroxyl group on the backbone of a fatty acid of the estolide.

More particularly, the estolide polyol ester is then of Formula II or III: 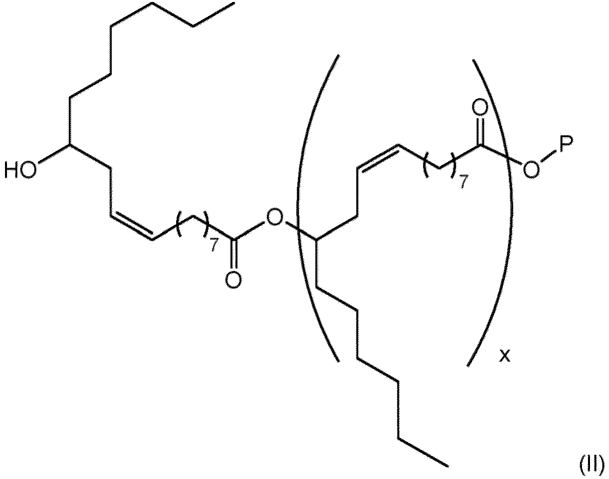 wherein:
- P represents a saturated, linear or cyclic, straight or branched, hydrocarbon chain comprising from 2 to 16 carbon atoms, substituted with at least one hydroxyl group, and optionally comprises an amine and/or an ether function;
- x is an integer ranging from 1 to 11, preferably from 1 to 8, more preferably from 2 to 6. 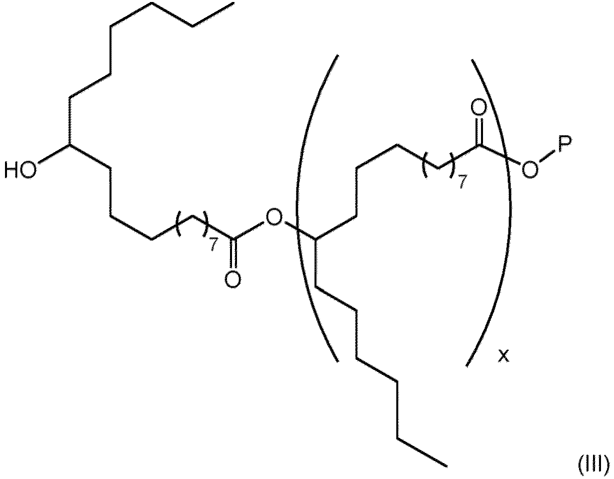 wherein:
   - P represents a saturated, linear or cyclic, straight or branched, hydrocarbon chain comprising from 2 to 16 carbon atoms, substituted with at least one hydroxyl group, and optionally comprises an amine and/or an ether function;
   - x is an integer ranging from 1 to 11, preferably from 1 to 8, more preferably from 2 to 6.

Alternatively, the fatty acid to be oligomerized comprises a double bond and no hydroxyl group. In particular, the fatty acid is oleic acid.

More particularly, the estolide polyol ester is of Formula IV: 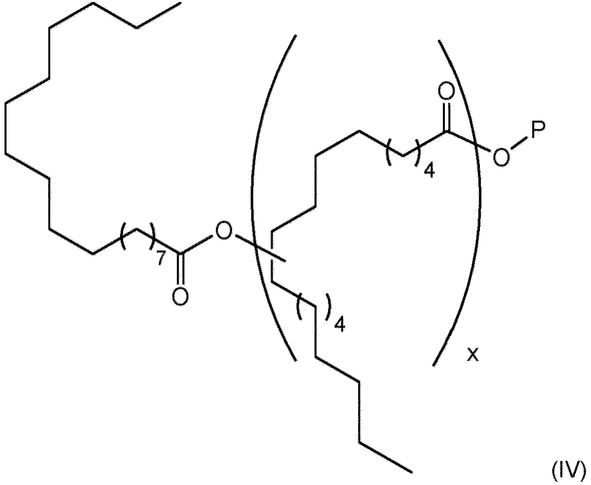 wherein:
- P represents a saturated, linear or cyclic, straight or branched, hydrocarbon chain comprising from 2 to 16 carbon atoms, substituted with at least one hydroxyl group, and optionally comprises an amine and/or an ether function;
- x is an integer ranging from 1 to 11, preferably from 1 to 8, more preferably from 2 to 6.

Each secondary ester linkage of the estolide can be positioned on C9 or on C10, as represented by the stearate group with a bond between C9 and C10 of the acyl group(s) in brackets.

In a second embodiment, the estolide is obtained from the oligomerization reaction of a mixture of fatty acids comprising fatty acid(s) with a double bond and/or a hydroxyl group, and saturated non substituted fatty acid(s).

Thus, the mixture of fatty acids for the oligomerization reaction is preferably selected from the group consisting of ricinoleic acid, lesquerolic acid, oleic acid, linoleic acid, linolenic acid, palmitoleic acid, eicosenoic acids, erucic acid, nervonic acid, castor oil fatty acids, lesquerella fatty acids, coconut fatty acids, palmkernel fatty acids, palm fatty acids, rapeseed fatty acids, sunflower fatty acids, high oleic sunflower fatty acids, safflower fatty acids, linseed fatty acids, soybean fatty acids, tallow fatty acids, crambe fatty acids and mixtures thereof.

In the estolide polyol ester of Formula (I)-(IV), P is an esterification residue of a polyol, the polyol being as described above, including preferential features.

Also, P preferably comprises between 3 and 16 carbon atoms, more preferably between 3 and 10 carbon atoms.

Preferably, in Formula (I)-(IV), P comprises between 1 and 4 hydroxyl groups.

Advantageously, in the composition according to the invention, wherein the estolide polyol ester is of Formula I, P is of Formula V, VI, VII or VIII: 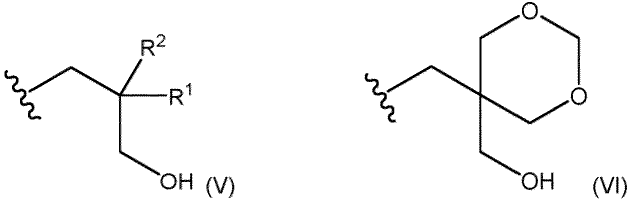 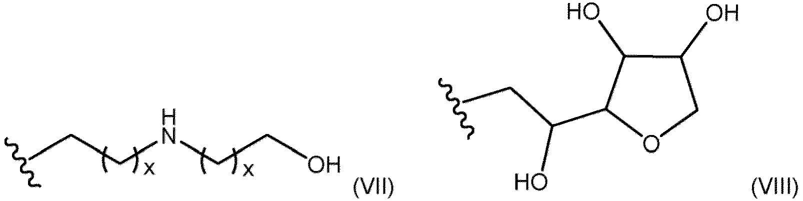 wherein:
- R¹, R², identical or different, represent CH₃, CH₂-CH₃ or CH₂-OH;
- x is equal to 1 or 2.

In the composition according to the invention, the polyol of the estolide polyol ester is more preferably selected among the group consisting of 1,3-dioxane-5,5-dimethanol, diethanolamine, dipropanolamine, sorbitan, neopentyl glycol, pentaerythritol and trimethylolpropane.

The fatty acid(s) of the salt of fatty acid(s) and an alkanolamine, may be straight or branched, preferably straight.

Preferably, the fatty acid(s) of the salt of fatty acid(s) and an alkanolamine, comprises between 8 and 24 carbon atoms, more preferably between 14 and 18 carbon atoms.

Preferably, a mixture of fatty acids is used to form the salt.

Preferably, the fatty acid(s) of the salt of fatty acid(s) and an alkanolamine is selected from the group consisting of myristic acid, palmitic acid, palmitoleic acid, stearic acid, oleic acid, linoleic acid, linolenic acid, eicosanoic acid, behenic acid and mixtures thereof.

Advantageously, the mixture of fatty acids is obtained from a renewable oil, in particular a vegetable oil.

More particularly, the mixture of fatty acids is obtained from rapeseed oil, sunflower oil, palm oil, soybean oil, corn oil, sesame oil, olive oil, argan oil, walnut oil, hazelnut oil, avocado oil, or peanut oil.

Preferably, the salt of fatty acid(s) and an alkanolamine is prepared by reacting the fatty acid(s) and the alkanolamine in a molar ratio of 1/1.

Advantageously, in the composition according to the invention, the alkanolamine is triethanolamine.

A preferred composition according to the invention comprises or consists of:
- 50-80 wt% of at least an estolide polyol ester, wherein the polyol is selected among the group consisting of 1,3-dioxane-5,5-dimethanol, diethanolamine, dipropanolamine, sorbitan, neopentyl glycol, pentaerythritol and trimethylolpropane;
- 10-20 wt% of a salt of fatty acid(s) and triethanolamine;
- 10-30 wt% of a surfactant selected from the group consisting of sorbitan monolaurate, sorbitan monooleate, ethoxylated derivatives thereof, and mixtures thereof;
weight percentages being based on the weight of the composition.

In particular, the preferred composition according to the invention comprises or consists of:
- 50-80 wt% of at least an estolide polyol ester of Formula I, II, III or IV, wherein Pis of Formula V, VI, VII or VIII;
- 10-20 wt% of a salt of fatty acid(s) and triethanolamine;
- 10-30 wt% of a surfactant selected from the group consisting of sorbitan monolaurate, sorbitan monooleate, ethoxylated derivatives thereof, and mixtures thereof;
weight percentages being based on the weight of the composition.

The quantity of estolide polyol ester is preferably comprised between 55 and 80 wt%, more preferably between 60 at 80 wt%, even more preferably between 60 and 75 wt% based on the weight of the composition.

The quantity of the salt of fatty acid(s) and an alkanolamine is preferably comprised between 10 and 15 wt% based on the weight of the composition.

The quantity of the surfactant is preferably comprised between 15 and 30 wt%, more preferably between 15 and 25 wt% based on the weight of the composition.

The surfactant is preferably ethoxylated sorbitan monooleate.

A particularly preferred composition according to the invention comprises or consists of:
- 60-75 wt% of at least an estolide polyol ester, wherein the polyol is selected among the group consisting of 1,3-dioxane-5,5-dimethanol, diethanolamine, dipropanolamine, sorbitan, neopentyl glycol, pentaerythritol and trimethylolpropane;
- 10-15 wt% of a salt of fatty acid(s) and triethanolamine;
- 15-25 wt% of ethoxylated sorbitan monooleate;
weight percentages being based on the weight of the composition.

In particular, the particularly preferred composition according to the invention comprises or consists of:
- 60-75 wt% of at least an estolide polyol ester of Formula II, III or IV, wherein Pis of Formula V, VI, VII or VIII;
- 10-15 wt% of a salt of fatty acid(s) and triethanolamine;
- 15-25 wt% of ethoxylated sorbitan monooleate;
weight percentages being based on the weight of the composition.

The composition according to the invention may be prepared by mixing an estolide polyol ester, a salt of fatty acid(s) and an alkanolamine selected from the group consisting of ethanolamine, diethanolamine, triethanolamine and mixtures thereof, and a surfactant selected from the group consisting of sorbitan monolaurate, sorbitan monooleate, ethoxylated derivatives thereof, and mixtures thereof.

The estolide polyol ester, the salt of fatty acid(s) and an alkanolamine and the surfactant are as described above, including preferential and advantageous features.

The composition according to the invention exhibits good thermal characteristics and lubricating property as shown in Examples.

The present invention also relates to an use of the composition according to the invention, as a lubricating additive.

In particular, the composition according to the invention is used as a friction reducer.

As illustrated in Example 3, the lubricating additive reduces the torque values of water-based muds, i.e. the lubricating additive reduces the frictions.

Indeed, as shown in Example 3, the lubricating additive is particularly efficient to reduce frictions under temperatures up to 90°C, since After Hot Rolling (AHR) torque readings are lower than 1 N.m and the difference between the Before Hot Rolling (BHR) and AHR torque reading are only of respectively 0.16 and 0.22 N.m for a water-based mud comprising a clay and potassium salt, and a water-based mud comprising a clay and calcium salt.

Thus, the composition according to the invention is particularly efficient for use in water-based muds.

The present invention also relates to a method for improving the lubricating property of a water-based mud, by adding the composition according to the invention, into the said water-based mud.

Preferably, the lubricating property refers to the friction reducer property.

The present invention also concerns a water-based mud comprising:
- water;
- at least a mineral salt and/or a clay; and
- the composition according to the invention.

When a mineral salt is present into the water-based mud, then preferably the salinity of the water-based mud is comprised between 10 and 100 g/L, more preferably between 30 and 100 g/L.

Preferably, the mineral salt is potassium chloride, calcium chloride and/or sodium chloride.

When a clay is present into the water-based mud, then preferably, the quantity of clay is comprised between 10 and 100 g/L.

Preferably, the clay is a bentonite, in particular a Wyoming-type bentonite.

Preferably, the water-based mud comprises at least a mineral salt and a clay.

The quantity of water is preferably of at least 75 vol%, more preferably of at least 85 vol%, even more preferably of at least 90 vol% based on the volume of the water-based mud.

Advantageously, in the water-based mud according to the invention, the quantity of the composition is of at least 0.5% by volume based on the volume of the water-based mud.

Preferably, the quantity of the composition is of at least 1% by volume, more preferably of at least 2% by volume based on the volume of the water-based mud.

The quantity of the composition is preferably of at most 10% by volume, more preferably of at most 5% by volume based on the volume of the water-based mud.

The water-based mud may further comprise a polymer, a filtrate reducer, a shale inhibitor, a densifier, an antioxidant agent, a biocide, a scale inhibitor and/or an antifoaming agent.

The present invention also concerns a process for preparing a water-based mud according to the invention, comprising a step of adding the composition according to the invention, to a mixture of water, and at least a mineral salt and/or a clay.

The mineral salt and the clay are as described above, including preferential features.

Preferably, the addition is performed under mixing.

The present invention also concerns an use of the water-based mud according to the invention, in a wellbore.

In particular, the water-based mud is used to lubricate the drilling equipment in the wellbore, more particularly the drill bit and the rotating drilling tool.

Thus, the present invention concerns a method for lubricating a drilling equipment in a wellbore, by adding the water-based mud according to the invention, in the said wellbore.

The present invention is further described in the following examples. It will be appreciated that the invention as claimed is not intended to be limited in any way by these examples.

### Example 1: Preparation of compositions

### 1. Preparation of a polyricinoleic acid polyol ester

### a) Preparation of the polyricinoleic acid

Polyricinoleic acid was prepared according to the method described in Example 1 of patent application JPH08027473A, using ricinoleic acid instead of hydrogenated castor oil fatty acid.

This gave a polyricinoleic acid with an acid value of 63 mg KOH/g.

The corresponding mean degree of oligomerization is of 3.

### b) Preparation of the polyricinoleic acid 1,3-dioxane-5,5-dimethyl ester

The esterification between polyricinoleic acid and 1,3-dioxane-5,5-dimethanol was conducted according to the method described in Example 1 of patent application JPH08027473A, using polyricinoleic acid prepared above in Example 1.1a), and 1,3-dioxane-5,5-dimethanol (CAS # 6228-25-7) instead of trimethylolpropane, and without adding caprylic acid nor paratoluenesulfonic acid. The reaction media was heated until the acid value reached 5 mg KOH/g.

### 2. Preparation of the composition C1 according to the invention

The composition C1 is obtained by mixing together 68.8 wt% of the polyricinoleic acid polyol ester prepared in Example 1.1, 11.2 wt% of a salt of rapeseed fatty acids and triethanolamine (CAS # 102-71-6), wherein the molar ratio rapeseed fatty acids / triethanolamine is of 1/1, and 20 wt% of ethoxylated sorbitan monooleate (CAS # 9005-65-6).

The composition C1 thus obtained presents the following characteristics:
- pour point: -24°C;
- flash point: 222°C;
- kinematic viscosity at 40°C: 169 mPa.s.

### 3. Preparation of the comparative composition C2 and C3

The comparative composition C2 was obtained according to method described in Example 1.2 using an estolide monoalcohol ester instead of the polyricinoleic acid polyol ester.

The comparative composition C3 was obtained according to method described in Example 1.2 using a fatty acid polyol ester, the monooleic acid 1,3-dioxane-5,5-dimethyl ester (ester obtained by esterification reaction between oleic acid and 1,3-dioxane-5,5-dimethanol) instead of the polyricinoleic acid polyol ester.

### Example 2: Preparation of water-based muds

### 1. Preparation of water-based muds without lubricating additive

Water-based muds 1 and 2 were prepared by mixing at room temperature until homogeneous materials described in Table 1 below.

**Table 1: Content of water-based muds 1 and 2**

| | Water-based mud 1 | Water-based mud 2 |
|---|---|---|
| Deionized water | 1000 g | 1000 g |
| API Standard Evaluation Base Clay (OFITE) | 80 g | 80 g |
| KCl (Merck) | 37.27 g | - |
| CaCl₂ (Alfa Aesar) | - | 55.49 g |

### 2. Preparation of water-based muds according the invention

Two water-based muds according to the invention were prepared by adding 2 vol% based on the volume of the water-based mud, of the composition C1 prepared in Example 1.2, into each water-based mud 1 and 2 prepared in Example 2.1, under mechanical high shear rate stirring, at room temperature for 2 minutes.

### 3. Preparation of water-based muds comprising a comparative composition

Four water-based muds were prepared by adding in each water-based mud 1 and 2 prepared in Example 2.1, 2 vol% of the comparative composition C2 or 2 vol% of the comparative composition C3 prepared in Example 1.3.

### Example 3: Evaluation of the lubricating property of water-based muds

The lubricating property of water-based muds were evaluated by testing the ability of the water-based muds to reduce frictional forces.

Therefore, the Lubricity Tester #112-00-1 from OFITE was used to measure the torque readings, corresponding to the torque related to the frictional force between two metallic parts: a rotating ring in motion (rotation speed of 60 rpm) and a block where a load (150 lbs.in, approx. 16.95 Nm) is applied. Those two metallic parts are completely submerged into the water-based mud tested. The measurements were carried out at two different aging conditions: Before Hot Rolling (BHR) and After Hot Rolling (AHR) at 90°C for 16 hours, according to the American Petroleum Institute (API) standard API RP 13I.

The torque reading measured is proportional to the frictional forces between the rotating ring and the block.

The torque readings are measured for the water-based muds without and in presence of 2 vol% of a lubricating composition.

The efficiency of each composition on lubricating property of water-based muds is then evaluated by measuring the torque reduction.

Torque readings and torque reductions are indicated in Table 2 below.

**Table 2: Torque readings in N.m (and in pound-inch -lbs.in- in brackets) and torque reduction percentages**

| | **Water-based mud 1** | | **Water-based mud 2** | |
|---|---|---|---|---|
| | BHR | AHR | BHR | AHR |
| No lubricating additive | 4.74 (42.0) | - | 4.74 (42.0) | - |
| 2 vol% of composition C1 | 0.34 (3.0) | 0.51 (4.5) | 0.68 (6.0) | 0.9 (8.0) |
| | 92.9 % | - | 85.7 % | - |
| 2 vol% of comparative composition C2 | 0.17 (1.5) | 1.07 (9.5) | 0.23 (2.0) | 1.36 (12.0) |
| | 96.4 % | - | 95.2 % | - |
| 2 vol% of comparative composition C3 | 0.73 (6.5) | 1.13 (10.0) | 1.02 (9.0) | 1.02 (9.0) |
| | 84.5 % | | 78.6 % | - |
| | | - | | |

The lower the torque value, the better the lubricating property of the tested water-based mud, in particular the friction reduction property of the tested water-based mud.

And the lower the difference between the BHR and the AHR values, the more stable the water-based mud is.

Thus, it can be observed that the presence of composition C1 according to the invention in water-based muds reduces the torque readings, in particular of at least 80% compared to same water-based muds which do not contain lubricating additive. It means that the composition according to the invention may be used as lubricating additive, in particular as friction reducer.

It can also be observed that the torque values of the water-based mud comprising the composition C1 according to the invention are lower than the torque values of the water-based muds comprising the comparative composition C3. It shows that the estolide polyol ester can better improve the lubricating property than the mono fatty acid polyol ester.

It can also be observed that while the BHR torque values of the water-based muds comprising the comparative composition C2 is slightly lower than the BHR torque values of the water-based muds comprising the composition C1 according to the invention, the AHR torques values of the water-based muds comprising the composition C1 are always lower than those comprising the composition C2. It shows that the estolide polyol ester is more stable at high temperature than the estolide monoalcohol esters.

Moreover, the difference between BHR torque values and AHR torque values are smaller in the case of a water-based mud comprising a composition according to the invention, indicating once again that the estolide polyol ester is more suitable for high temperature conditions and then is more adapted to the drilling conditions than an estolide monoalcohol ester or a mono fatty acid polyol ester.

## Claims

1. Composition comprising or consisting of:
- 50-80 wt% of at least an estolide polyol ester;
- 10-20 wt% of a salt of fatty acid(s) and an alkanolamine selected from the group consisting of ethanolamine, diethanolamine, triethanolamine and mixtures thereof;
- 10-30 wt% of a surfactant selected from the group consisting of sorbitan monolaurate, sorbitan monooleate, ethoxylated derivatives thereof, and mixtures thereof;
weight percentages being based on the weight of the composition.

2. Composition according to claim 1, wherein the estolide polyol ester is of Formula I: 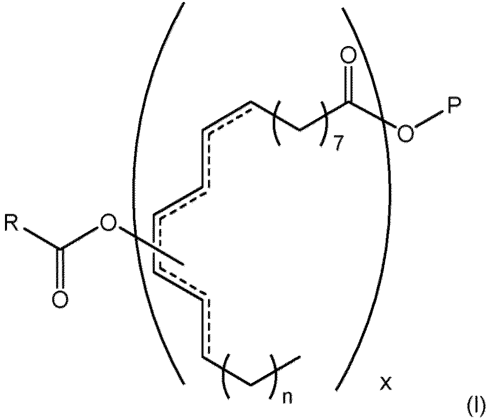 wherein:
- n is an integer ranging from 0 to 8;
- the dotted line represents the localization of a secondary ester linkage of the estolide and the localization of an optional bond, with the provisio of maximum two double bonds per acyl group;
- P represents a saturated, linear or cyclic, straight or branched, hydrocarbon chain comprising from 2 to 16 carbon atoms, substituted with at least one hydroxyl group, and optionally comprises an amine and/or an ether function;
- x is an integer ranging from 1 to 11;
- R represents an hydrocarbon chain, saturated or unsaturated, straight or branched, comprising from 1 to 25 carbon atoms, optionally substituted by a hydroxyl group.

3. Composition according to claim 2, wherein P is of Formula V, VI, VII or VIII: 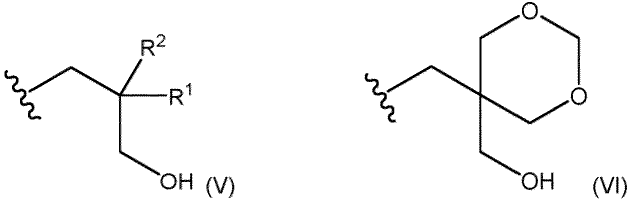 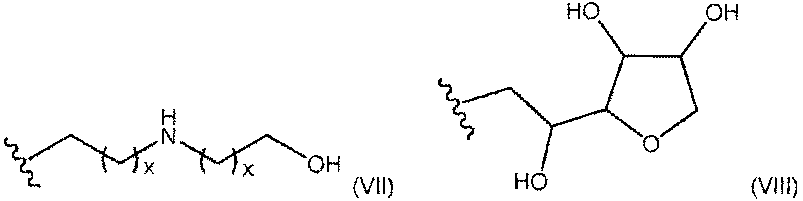 wherein:
- R¹, R², identical or different, represent CH₃, CH₂-CH₃ or CH₂-OH;
- x is equal to 1 or 2.

4. Composition according to any of claims 1 to 3, wherein the alkanolamine is triethanolamine.

5. Use of the composition according to any of claims 1 to 4, as a lubricating additive.

6. Method for improving the lubricating property of a water-based mud, by adding the composition according to any of claims 1 to 4, into the said water-based mud.

7. Water-based mud comprising:
- water;
- at least a mineral salt and/or a clay; and
- the composition according to any of claims 1 to 4.

8. Water-based mud according to claim 7, wherein the quantity of the composition is of at least 0.5% by volume based on the volume of the water-based mud.

9. Process for preparing a water-based mud according to claims 7 or 8, comprising a step of adding the composition according to any of claims 1 to 4, to a mixture of water, and at least a mineral salt and/or a clay.

10. Use of the water-based mud according to claims 7 or 8, in a wellbore.

## Patentansprüche

1. Zusammensetzung, umfassend oder bestehend aus:
- 50-80 Gew.-% mindestens eines Estolidpolyolesters;
- 10-20 Gew.-% eines Salzes der Fettsäure(n) und eines Alkanolamins, ausgewählt aus der Gruppe bestehend aus Ethanolamin, Diethanolamin, Triethanolamin und Mischungen davon;
- 10-30 Gew.-% eines Tensids, ausgewählt aus der Gruppe bestehend aus Sorbitanmonolaurat, Sorbitanmonooleat, ethoxylierten Derivaten davon und Mischungen davon;
Gewichtsprozente, basierend auf dem Gewicht der Zusammensetzung.

2. Zusammensetzung nach Anspruch 1, wobei der Estolidpolyolester die Formel I hat: 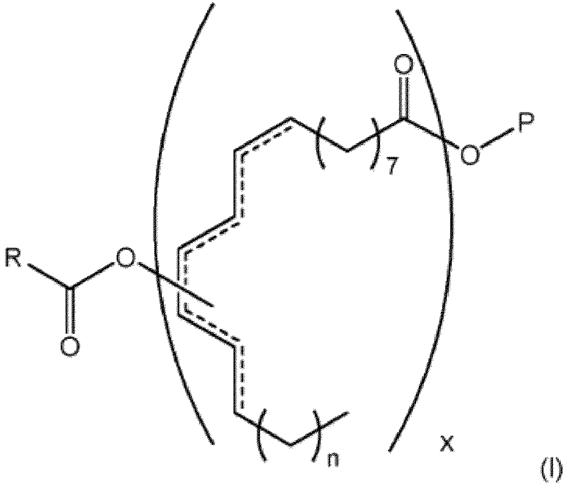 wobei:
- n eine ganze Zahl zwischen 0 und 8 ist;
- die gestrichelte Linie die Lokalisierung einer sekundären Esterbindung des Estolids und die Lokalisierung einer optionalen Bindung darstellt, mit der Maßgabe von maximal zwei Doppelbindungen pro Acylgruppe;
- P eine gesättigte, lineare oder zyklische, gerade oder verzweigte Kohlenwasserstoffkette darstellt, umfassend 2 bis 16 Kohlenstoffatome, mit mindestens einer Hydroxylgruppe ersetzt ist und optional eine Amin- und/oder Etherfunktion umfasst;
- x eine ganze Zahl zwischen 1 und 11 ist;
- R eine gesättigte oder ungesättigte, gerade oder verzweigte Kohlenwasserstoffkette darstellt, umfassend 1 bis 25 Kohlenstoffatome und optional durch eine Hydroxylgruppe substituiert ist.

3. Zusammensetzung nach Anspruch 2, wobei P die Formel V, VI, VII oder VIII hat: 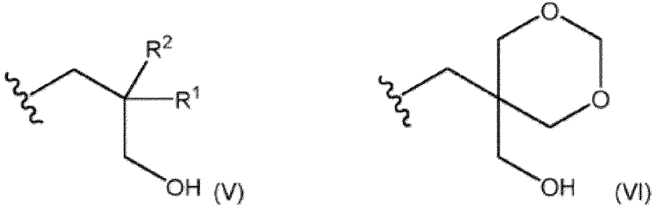 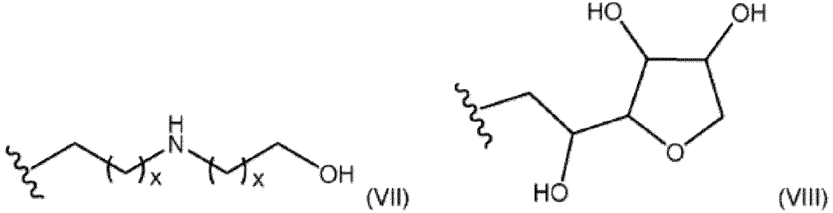 wobei:
- R¹, R², gleich oder verschieden, CH₃, CH₂-CH₃ oder CH₂-OH darstellen;
- x gleich 1 oder 2 ist.

4. Zusammensetzung nach einem der Ansprüche 1 bis 3, wobei das Alkanolamin Triethanolamin ist.

5. Verwenden der Zusammensetzung nach einem der Ansprüche 1 bis 4 als Schmieradditiv.

6. Verfahren zur Verbesserung der Schmiereigenschaften eines Schlamms auf Wasserbasis durch Hinzufügen der Zusammensetzung nach einem der Ansprüche 1 bis 4 zu dem genannten Schlamm auf Wasserbasis.

7. Schlamm auf Wasserbasis, umfassend:
- Wasser;
- mindestens ein Mineralsalz und/oder einen Ton; und
- die Zusammensetzung nach einem der Ansprüche 1 bis 4.

8. Schlamm auf Wasserbasis nach Anspruch 7, wobei die Menge der Zusammensetzung mindestens 0,5 % des Volumens, basierend auf dem Volumen des Schlamms auf Wasserbasis, beträgt.

9. Verfahren zum Herstellen eines Schlamms auf Wasserbasis nach einem der Ansprüche 7 oder 8, umfassend einen Schritt des Hinzufügens der Zusammensetzung nach einem der Ansprüche 1 bis 4 zu einer Mischung aus Wasser und mindestens einem Mineralsalz und/oder einem Ton.

10. Verwenden des Schlamms auf Wasserbasis nach den Ansprüchen 7 oder 8 in einem Bohrloch.

## Revendications

1. Composition comprenant ou consistant en :
- 50 à 80 % en poids d'au moins un ester de polyol et d'estolide ;
- 10 à 20 % en poids d'un sel d'acide(s) gras et d'une alcanolamine sélectionnée dans le groupe consistant en l'éthanolamine, la diéthanolamine, la triéthanolamine et les mélanges de celles-ci ;
- 10 à 30 % en poids d'un tensioactif sélectionné dans le groupe consistant en le monolaurate de sorbitane, le monooléate de sorbitane, les dérivés éthoxylés de ceux-ci, et les mélanges de ceux-ci ;
les pourcentages en poids étant basés sur le poids de la composition.

2. Composition selon la revendication 1, dans laquelle l'ester de polyol et d'estolide est de formule I : 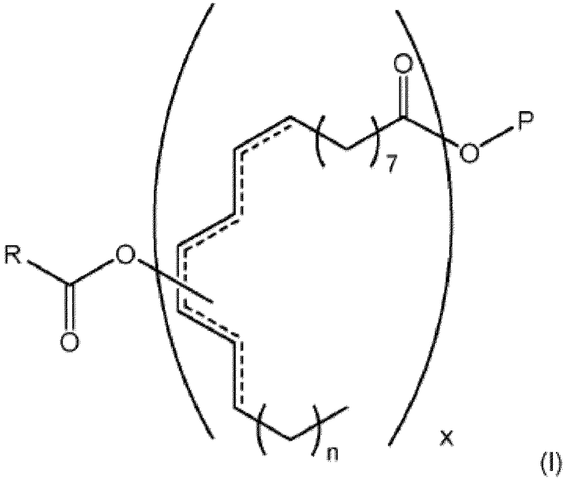 dans laquelle :
- n est un nombre entier allant de 0 à 8 ;
- la ligne pointillée représente la localisation d'une liaison ester secondaire de l'estolide et la localisation d'une liaison facultative, à condition qu'il n'y ait au maximum que deux liaisons doubles par groupe acyle ;
- P représente une chaîne hydrocarbonée saturée, linéaire ou cyclique, droite ou ramifiée, comprenant de 2 à 16 atomes de carbone, substituée avec au moins un groupe hydroxyle, et comprend facultativement une fonction amine et/ou éther ;
- x est un nombre entier allant de 1 à 11 ;
- R représente une chaîne hydrocarbonée, saturée ou insaturée, droite ou ramifiée, comprenant de 1 à 25 atomes de carbone, facultativement substituée avec un groupe hydroxyle.

3. Composition selon la revendication 2, dans laquelle P est de Formule V, VI, VII ou VIII : 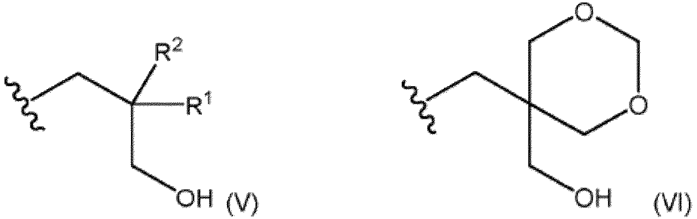 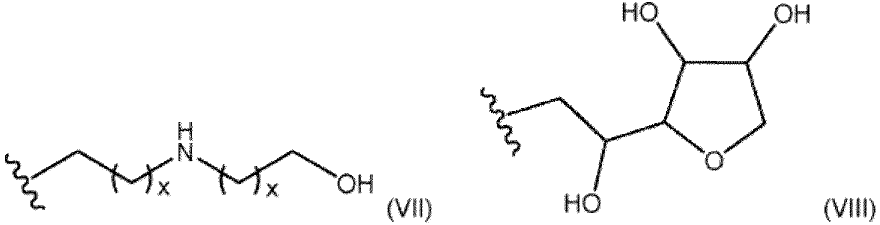 dans lesquelles :
- R¹, R², identiques ou différents, représentent CH₃, CH₂-CH₃ ou CH₂-OH ;
- x est égal à 1 ou 2.

4. Composition selon l'une quelconque des revendications 1 à 3, dans laquelle l'alcanolamine est la triéthanolamine.

5. Utilisation de la composition selon l'une quelconque des revendications 1 à 4, comme additif de lubrification.

6. Procédé d'amélioration de la propriété lubrifiante d'une boue à base d'eau, par ajout de la composition selon l'une quelconque des revendications 1 à 4 à ladite boue à base d'eau.

7. Boue à base d'eau comprenant :
- de l'eau ;
- au moins un sel minéral et/ou une argile ; et
- la composition selon l'une quelconque des revendications 1 à 4.

8. Boue à base d'eau selon la revendication 7, dans laquelle la quantité de la composition est au moins de 0,5 % en volume sur la base du volume de la boue à base d'eau.

9. Procédé de préparation d'une boue à base d'eau selon les revendications 7 ou 8, comprenant une étape d'ajout de la composition selon l'une quelconque des revendications 1 à 4 à un mélange d'eau et d'au moins un sel minéral et/ou une argile.

10. Utilisation de la boue à base d'eau selon les revendications 7 ou 8, dans un puits de forage.
